Europäisches Patentamt

(19) European Patent Office

Office européen des brevets

(11) Publication number: **0 184 292**
**A2**

(12) **EUROPEAN PATENT APPLICATION**

(21) Application number: **85307190.0**

(22) Date of filing: **08.10.85**

(51) Int. Cl.⁴: **C 04 B 35/44**
**C 04 B 35/66**

(30) Priority: **09.10.84 US 659156**

(43) Date of publication of application:
**11.06.86 Bulletin 86/24**

(84) Designated Contracting States:
**AT BE CH DE FR GB IT LI LU NL SE**

(71) Applicant: **THE DOW CHEMICAL COMPANY**
**2030 Dow Center Abbott Road P.O. Box 1967**
**Midland, MI 48640(US)**

(72) Inventor: **Cisar, Alan James**
**2546 Coopers Post Lane**
**Sugar Land Texas 77478(US)**

(74) Representative: **Raynor, John et al,**
**W.H. Beck, Greener & Co 7 Stone Buildings Lincoln's Inn**
**London WC2A 3SZ(GB)**

(54) **Refractory compositions incorporating reactive spinels and their use.**

(57) A composition useful particularly as a mortar, coating, castable or ramming mix is disclosed comprising:

(1) 5 to 85 percent by weight of at least one reactive magnesium aluminium oxide spinel derived by coprecipitating water soluble magnesium salt(s) and aluminium salt(s) in a proportion to provide from about 0.5 to about 1 magnesium atom per aluminium atom, heating the coprecipitate to between about 700° to about 1650°C to convert it to its oxide form ($MgAl_2O_4$) which contains from about 1 to about 25 percent by weight segregated MgO phase intimately dispersed therein;

(2) 0 to 80 percent by weight of a substantially non-reactive filler material;

(3) 1 to 20 percent by weight of an inorganic phosphate material capable of forming $(PO_3)_n^-$ moieties on heating at above about 200°C;

(4) 4 to 30 percent by weight water; and

(5) 0 to 5 percent by weight handling agents.

EP 0 184 292 A2

0184292

TITLE MODIFIED
see front page

REFRACTORY COMPOSITIONS INCORPORATING REACTIVE SPINELS,
AND THEIR USE AS MORTARS, COATING COMPOSITIONS,
CASTING COMPOSITIONS, RAMMING MIXTURES,
GUNNING MIXTURES AND BINDERS

This invention concerns a composition having a segregated phase of MgO in the $MgAl_2O_4$ component usuable as a controllable set mortar, coating, casting or ramming mix.

The following patents and literature references represent some aspects of the general field of magnesium aluminum oxide spinels used in mortars, castables and coatings and the like employing phosphorous acids as a reactive component. U.S. Patent 3,730,744 discloses the use of fused magnesium aluminate as an aggregate in cast shapes employing $Al(H_2PO_4)_3$ as the bonding solution which contains small amounts of alkalizing ions as the curing agents. U.S. Patent 3,285,758 teaches ammonium phosphate in combination with aluminum phosphate plus MgO (calcined dolomite). A 70 percent magnesia-30 percent alumina spinel is mentioned as an aggregate. U.S. Patent No. 4,459,156 discloses the presence of a segregated phase in a different composition.

A fundamental review of phosphate bonding is found in J. AMER. CERAMIC SOCIETY, Vol. 133, No. 8, August 1, 1950 by William David Kingery. Another review is found in Ceramic Bulletin, Vol. 56, No. 7, page 640 by J.E. Cassidy (1977). Other studies are as follows: Ceramic Bulletin, Vol 59, No. 7 (1980) by Francisco·J. Gonzales and John W. Halloran, "Reaction of Orthophosphoric Acid with Several Forms of Aluminum Oxide" and an abstract of a Russian Scientific paper authored by L. B. Khoroshavin, V. A. Ryabin, I. E. Sipeiko, V. N. Naumov, G. A. Sychev, V. Ya. Pavlov, V. M. Chyrin, N. F. Serenko, B. V. Ponomarev, and E. P. Kosolapova, Eastern Institute of Refractories, Ural Scientific-Research Institute of Chemistry, Perm Chemical Plant, All-Union Scientific-Research Institute for the Power Supply in Nonferrous Metallurgy, from Ogneupory, No. 3, pp. 34-36, March, 1977 (translated).

The two review articles, the one by Kingery (covering the art to 1949) and the other by Cassidy (from 1949-1977) form a very complete picture of the state of technology on phosphate bonding. Materials listed as forming phosphate bonds with phosphoric acid are: $TiO_2$, $CaO$, $FeO$, $Fe_2O_3$, $NiO$, $ZnO$, $ZrO_2$, $MgO$, $Al_2O_3$, and $CrO_3$. These may be reacted as pure compounds or as constituents in mineral compositions, i.e., asbestos, bauxite or clay. The most common bonding mechanism using phosphoric acid is the reaction with alumina to form $Al(H_2PO_4)_3$, which is also the starting material in many formulations in place of $H_3PO_4$. $Al(H_2PO_4)_3$ further reacts with either alumina, clay or bauxite, resulting in orthophosphates ($MgHPO_4 \cdot 3H_2O$ or $AlH_3(PO_4)_2$) as the bond.

The patent literature very closely follows the above literature review; that is, while it teaches phosphate bonded systems, it only mentions spinel as one possible aggregate material. Also these aggregates are not "reactive" with any activity observed due to free MgO and are typically part of the coarse grained portion, with very few fines (material <325 mesh).

In accordance with the present invention, the rate of hardening of compositions produced is described in U.S. Patent 4,459,156. The present invention relates to a more rapid hardening or initial set of the present composition. The essential ingredient for producing this acceleration is an intimate mixture of MgO (periclase, the actual accelerator) and $MgAl_2O_4$ (spinel) which intimate admixture is preferably produced by the coprecipitation process described in U.S. 4,400,431. This mixture, containing 1 to 25 weight percent MgO, is used to replace part or all of the $MgAl_2O_4$ in these formulations.

The literature previously cited clearly indicates that the addition of almost any base to an acid phosphate bound system will produce accelerated hardening. Not all bases will produce easily reproducible or controllable results, however, and some, through the introduction of ions otherwise not present in the mixture can reduce the refractoriness or the high temperature strength of the final product. A second difficulty encountered is non-uniformity of dispersion of the accelerator. Since the amount of accelerator used is small relative to the total mixture, adding it in pure form can lead to difficulties in achieving thorough mixing, with local variations in concentration leading to an uneven hardening state throughout the batch. This problem is overcome when the accelerator is present or added as part of a coprecipitated mixture.

In accordance with the present invention there is described a controllable set mortar, coating, castable or ramming mix composition which is particularly, useful in the metals industry for the construction and repair of refractory linings and coating and component parts for example, in melting furnaces, electrolytic metal winning cells, component parts for ferrous or non-ferrous metal casting machines, including gates, transfer pipes and troughs, nozzles and the like, as well as refractory linings and linings and coatings of the chemical and petrochemical industry.

The present invention concerns particularly a mortar, coating, castable or ramming mix composition comprising:

(1) 5 to 85 percent by weight of at least one reactive magnesium aluminum oxide spinel derived by coprecipitating water soluble magnesium salt(s) and aluminum salt(s) in a proportion to provide from about 0.5 to about 1 magnesium atom per aluminum atom, heating the coprecipitate to between about 700° to about 1650°C to convert it to its oxide form ($MgAl_2O_4$) which contains from about 1 to about 25 percent by weight segregated MgO phase intimately dispersed therein;

(2) preferably, from 0 to 80 per cent by weight of a substantially non-reactive filler material;

(3)  1 to 20 percent by weight of an inorganic phosphate material capable of forming $(PO_3)_n^-$ moieties on heating at above about 200°C;

(4)  4 to 30 percent by weight of water; and

(5)  preferably, from 0 to 5 per cent by weight of one or more handling agents.

The non-reactive filler material (component 2) is usually highly sintered.  Examples of suitable filler materials are tabular alumina, fused grain alumina, fused grain spinel, $(MgAl_2O_4)$, highly sintered $MgAl_2O_4$ (made by U.S. Patent 4,400,431) as well as other fused grain materials such as $ZrSiO_4$.

The inorganic phosphate material (component 3) must be capable of forming $(PO_3)_n^-$ moieties on heating (i.e. drying out of the formulation) at above about 200 °C.  Suitable examples of the phosphate material are $Al(H_2PO_4)_3$ and $H_3PO_4$.

Water (component 4) is employed as necessary to give workability to the binder composition, as are (preferably) handling agents.  Total water content usually employed is from about 4 to about 30 weight percent of the total composition.

The handling agents investigated (component 5) include activated alumina, fumed alumina $(Al_2O_3)$, glycerine, polyvinyl alcohol, or mixtures of two or more, employed in from 0 to about 5 weight percent of the total composition.  Other well known handling agents, including set modifiers, may be employed.

0184292

Depending the ultimate use for the composition, various fillers, fibers (ceramic and/or metal), aggregates and the like may be added to give compression strengths, reduce density and/or improve bond strength, and insulating properties as obtained by incorporating these materials in conventional mortars, coatings, castables and the like.

Preferred compositions of the present invention are those wherein the magnesium aluminum oxide spinel is a mixture of at least two spinels each having a different thermal history, at least one of which is derived by coprecipitating Mg and Al salts in a ratio between about 1 to 2, respectively, and at least one other by coprecipitating Mg and Al salts in a ratio between about 1 to <2, respectively. Particularly preferred compositions of two spinels are those where one contains about 22 percent by weight MgO and being present in 3 to about 20 percent by weight based on the total composition.

Formulations containing the aforedescribed components are hereafter set forth in tabular form to illustrate the variety of mixtures of those components within the scope of the present invention which produce excellent mortars, coatings and the like for ceramic bodies which are to be put into severe corrosive and/or high temperature service.

It is to be understood that the compositions of this invention may, in addition to being mortars and coatings, also be used in preparing castables, ramming mixtures, gunning mixtures, and the like; or used as the binder system in pressed, extruded, or cast refractory shapes.

32,777-F     -6-

0184292

The following table illustrates the preferred operable ranges of general components falling within the present invention:

| | MgAl$_2$O$_4$ | | MgO/MgAl$_2$O$_4$[a] | Filler | Al(H$_2$PO$_4$)$_3$ | H$_3$PO$_4$ | H$_2$O | set-time |
|---|---|---|---|---|---|---|---|---|
| Ex. 1a | 1600°C[b] 39.4[b] | 800°C 5.7 | -- | fused Al$_2$O$_3$ 30.8 | 10.1 | -- | 13.9 | weeks |
| Ex. 1b | 1600°C 39.4 | | 1000°C 5.7 | fused Al$_2$O$_3$ 30.8 | 10.1 | -- | 13.9 | 25 min. |
| Ex. 1c | 1600°C 19.4 | | 1000°C 19.4 | fused Al$_2$O$_3$ 26.5 | 8.7 | -- | 26.1 | 3-5 min. |
| Ex. 2 | 1600°C 30.7 | 800°C 5.5 | 1000°C 4.0 | porous Al$_2$O$_3$ 31.4 | 9.3 | -- | 19.1 | 90 min. |
| Ex. 3 | 1600°C 31.0 | 800°C 5.5 | 1000°C 3.0 | porous Al$_2$O$_3$ 31.6 | 9.9 | -- | 18.9 | 2 hr. |
| Ex. 4 | -- | -- | 1500°C 43.9 | Tabular Al$_2$O$_3$ 30.0 | 8.9 | 1.2 | 16.0 | 2-5 min. |

[a] MgO/MgAl$_2$O$_4$ is derived by coprecipitating magnesium salt and aluminum salt in accordance with U.S. Patent No. 4,400,431 containing 22.1 percent by weight MgO from coprecipitating magnesium and aluminum in a 1 to 1 molar ratio.

[b] entries are tabulated temperature of calcination with percent by weight of that ingredient below the temperature value.

0184292

In the following examples, unless otherwise denoted, the reactive $MgAl_2O_4$ spinel and $MgO/MgAl_2O_4$ spinel intimate mixture are derived from a coprecipitation process in which a mixture of magnesium aluminum hydroxides ($Mg_xAl_y(OH)_z$) and aluminum hydroxides and/or aluminum oxyhydroxides are produced. The magnesium aluminum hydroxide phase represented above may contain other anions partially substituting for hydroxide (e.g. $Cl^-$, $NO_3^-$, $SO_4^=$, $CO_3^=$), the presence and amount of which will be determined by the type of reactant salts used in the coprecipitation and the type and duration of subsequent treatments, chemical or thermal, to which the precipitate phase has been subjected. The precipitate of magnesium/aluminum and aluminum hydroxy compound is referred to as spinel precursor. The overall Al/Mg ratio with this mixture varies from 1.0 to 2.0/1. When this ratio is significantly less than 2.0 (e.g. <1.90) segregated MgO occurs highly dispersed throughout the calcined or sintered product.

The $Al(H_2PO_4)_3$, $H_3PO_4$, fused grain $Al_2O_3$, fumed alumina, tabular alumina and others are all commercially available, substantially pure compounds and/or solutions. The sintered spinels may be commercially available fused grain material or a highly sintered, above 1650°C spinel prepared in accordance with U.S. Patent 4,400,431.

The preferred manner of preparing formulations of the present invention is to combine the reactive spinel, accelerator, inert fillers, if used, and any other solid components, as a dry mix then adding the dry mix to the liquid components. Although reverse mixing may be employed it is easier and requires less energy intensive mixing to add the dry mix to the liquid.

Example I

110 g. of $MgAl_2O_4$ is sintered to ~1600°C, and 16 g of $MgAl_2O_4$ calcined to ~800°C, both ground to pass through a U.S. standard 100 mesh sieve, are mixed with 86 g. of fused grain alumina. This mixture is blended with a solution of 28.2 g $Al(H_2PO_4)_3$ in 38.8 g $H_2O$ to produce a mortar with acceptable shelf life in a closed container (several weeks) and good strength [bond strength to alumina brick 1600 psi (11024 kPa), compressive strength 2300 psi (15847 kPa)].

Replacing the 16 g of $MgAl_2O_4$ calcined to ~800°C with 16 g of a $MgO-MgAl_2O_4$ mixture (22.1 wt% MgO) calcined to ~1000°C and ground to pass 100 mesh produces a mortar with good strength [bond strength to high alumina brick 650 psi (4478 kPa), compressive strength 3300 psi (22737 kPa)], but a much more rapid set time of about 25 minutes in either air or a sealed container.

When a further replacement of 47 g. of $MgAl_2O_4$ sintered to ~1600°C by a like amount of the $MgO-MgAl_2O_4$ mixture calcined to ~1000°C an additional 46 g. of water is required to produce a workable consistency, largely because of the greater surface area of the material which has not been sintered. This formulation gives good compressive strength 3800 psi (26182 kPa) and has a working time of 3 to 5 minutes. While this is inadequate for normal brick or block applications, it maybe useful for gunning or other applications where the material is applied quickly after mixing and must develop strength rapidly.

## Example II

39.2 g. of MgAl$_2$O$_4$ is sintered to ∿1600°C, 7.0 g. of MgAl$_2$O$_4$ calcined to ∿800°C, and 5.1 g. of an MgO/MgAl$_2$O$_4$ mixture (22.1 wt% MgO) calcined to ∿1000°C are combined with a solution of 10.3 g. Al(H$_2$PO$_4$)$_3$ in 15.9 g. H$_2$O. In a separate container 40 g. of porous alumina is pretreated with a solution of 1.5 g. Al(H$_2$PO$_4$)$_3$ in 8.5 g. of H$_2$O. The porous alumina is then added to the MgAl$_2$O$_4$ containing mixture. This produces a low density (∿80 lb/ft$^3$, 128 kg/m$^3$) insulating castable which sets in ∿90 minutes and can be immediately dried and cured.

## Example III

A low density insulating castable which sets in about 2 hours is produced by the method of Example II with the following changes; the amount of MgO/-MgAl$_2$O$_4$ mixture is decreased from 5.1 g. to 3.8 g., the amount of Al(H$_2$PO$_4$)$_3$ is increased from 10.3 g. to 11.0 g., and the amount of water is decreased from 15.9 g. to 15.4 g.

## Example IV

63 g of an intimate mixture of MgO and MgAl$_2$O$_4$ (22.1 weight percent MgO) produced by coprecipitation, sintered at 1500°C, and ground to pass a U.S. standard 100 mesh is mixed with 43 g. of tabular alumina sized to pass 100 mesh. This mixture is combined with a solution of 12.7 g. Al(H$_2$PO$_4$)$_3$ and 1.7 g. H$_3$PO$_4$ in 23 g. H$_2$O to produce a mortar which sets in 2 to 5 minutes and has a compressive strength of 1100 psi (7579 kPa).

- 12 -

CLAIMS

1.    A composition comprising:

(a)    5 to 85 per cent by weight of at least one reactive magnesium aluminum oxide spinel derived by coprecipitating water soluble magnesium salts(s) and aluminum salt(s) in a proportion to provide from about 0.5 to about 1 magnesium atom per aluminum atom, heating the coprecipitate to between about 700° to about 1650°C to convert it to its oxide form $(MgAl_2O_4)$ which contains from about 1 to about 25 per cent by weight segregated MgO phase intimately dispersed therein;

(b)    1 to 20 per cent by weight of an inorganic phosphate material capable of forming $(PO_3)_n^-$ moieties on heating at above about 200°C; and

(c)    4 to 40 per cent by weight of water.

2.    A composition as claimed in claim 1, which also comprises a substantially non-reactive filler, in an amount of up to 80 per cent by weight.

3.    A composition as claimed in claim 1 or claim 2, which also comprises at least one handling agent, in an amount of up to 5 per cent by weight.

4.    A composition as claimed in any one of the preceding claims, which composition comprises at least two spinels each having a different thermal history, at least one of which is derived by coprecipitating Mg and Al salts in the ratio of about 1 to 2, respectively, and at least one other is derived by coprecipitating Mg and Al salts in a ratio between about 1 to $<$ 2, respectively.

5. A composition as claimed in claim 4 comprising two spinels, one containing about 22 per cent by weight MgO and being present in 3 to about 20 per cent by weight based on the total composition.

6. A composition as claimed in claim 4, consisting of about 39 weight per cent of a 1600°C calcined mixture of about 22 weight per cent MgO and about 78 weight per cent $MgAl_2O_4$; about 31 weight per cent of fused $Al_2O_3$; about 10 weight per cent $Al(H_2PO_4)_3$ and about 14 per cent water.

7. A composition as claimed in claim 4 consisting of about 19 weight per cent of a 1600°C calcined $MgAl_2O_4$; about 19 weight per cent of a 1000°C calcined mixture of about 22 weight per cent MgO and about 78 weight per cent $MgAl_2O_4$; about 27 weight per cent of fused $Al_2O_3$; about 9 weight per cent $Al(H_2PO_4)_3$ and about 26 per cent water.

8. A composition as claimed in claim 4 consisting of about 31 weight per cent of a 1600°C calcined $MgAl_2O_4$; about 6 weight per cent of an 800°C calcined $MgAl_2O_4$; about 4 weight per cent of a 1000°C calcined mixture of about 22 weight per cent

MgO and about 78 weight per cent $MgAl_2O_4$; about 31 weight per cent of porous $Al_2O_3$; about 9 weight per cent $Al(H_2PO_4)_3$ and about 19 per cent water.

9. A composition as claimed in claim 4 consisting of about 31 weight per cent of a 1600°C calcined $MgAl_2O_4$; about 6 weight per cent of an 800°C calcined $MgAl_2O_4$; about 3 weight per cent of a 1000°C calcined mixture of about 22 weight per cent MgO and about 78 weight per cent $MgAl_2O_4$; about 32 weight per cent of porous $Al_2O_3$; about 10 weight per cent $Al(H_2PO_4)_3$ and about 19 per cent water.

10. A composition as claimed in claim 4 consisting of about 44 weight per cent of a 1500°C calcined mixture of about 22 weight per cent MgO and about 78 weight per cent $MgAl_2O_4$; about 30 weight per cent of tabular $Al_2O_3$; about 9 weight per cent $Al(H_2PO_4)_3$; about 1 weight per cent $H_3PO_4$ and about 16 weight per cent water.

11. The use of a composition as claimed in any one of the preceding claims, as a mortar, coating composition, casting composition, ramming mixture, gunning mixture, or binder system.